Europäisches Patentamt

European Patent Office

Office européen des brevets

(11) Numéro de publication: **0 310 491 B1**

# FASCICULE DE BREVET EUROPEEN

(45) Date de publication de fascicule du brevet: **14.10.92**  (51) Int. Cl.5: **G01C 5/04**

(21) Numéro de dépôt: **88402431.6**

(22) Date de dépôt: **27.09.88**

(54) **Dispositif de mesure de variation verticale de position, et système de mise à niveau muni d'un tel dispositif.**

(30) Priorité: **29.09.87 FR 8713455**

(43) Date de publication de la demande:
**05.04.89 Bulletin 89/14**

(45) Mention de la délivrance du brevet:
**14.10.92 Bulletin 92/42**

(84) Etats contractants désignés:
**AT BE CH DE ES FR GB GR IT LI LU NL SE**

(56) Documents cités:
**FR-A- 2 562 987**
**US-A- 4 026 156**
**US-A- 4 356 639**
**US-A- 4 651 433**

(73) Titulaire: **SOCIETE D'ETUDES TECHNIOUES ET D'ENTREPRISES GENERALES SODETEG**
**381 Avenue du Général de Gaulle**
**F-92142 CLAMART(FR)**

(72) Inventeur: **Le Baud, Patrice**
**Thomson-CSF SCPI-19, avenue de Messine**
**F-75008 Paris(FR)**

(74) Mandataire: **Phan, Chi Ouy et al**
**THOMSON-CSF SCPI**
**F-92045 PARIS LA DEFENSE CEDEX 67(FR)**

## Description

La présente invention concerne un dispositif de mesure de variation verticale de position, et un système de mise à niveau muni d'un tel dispositif.

Une mesure de variation verticale de position de un ou plusieurs points déterminés d'une construction ou d'une installation industrielle ou scientifique qui permet de suivre un changement de niveau de ces points, se révèle souvent indispensable pour un bon entretien ou une bonne maintenance de cette construction ou installation. En effet, un bon fonctionnement d'une construction tel qu'un barrage ou d'une installation industrielle ou scientifique tel qu'un synchrotron dépend en grande partie d'une stabilité relative de ses différentes parties. Or cette construction ou cette installation s'étend souvent sur une grande surface de terrain dont la structure, la composition et l'état hydrographique peuvent changer d'un emplacement à un autre et entraîner des glissements inégaux de ses couches ou des affaissements hétérogènes qui dérèglent le fonctionnement ou compromettent la solidité ou le bon fonctionnement de cette construction ou installation. Dans une installation scientifique tel que celle d'un synchrotron, une variation de niveau d'une valeur de un dixième de millimètre peut déjà compromettre son fonctionnement ou son exploitation industrielle ou scientifique. Pour pallier cet inconvénient, on a pensé à contrôler la variation de niveau des principaux points d'une telle installation par visée à laser. Cependant, ces points sont souvent éloignés les uns des autres ou cachés les uns par rapport aux autres. Pour avoir rapidement ou à tout moment des informations sur la variation de niveau de ces points, il faut équiper ceux-ci chacun d'un émetteur à laser et d'un récepteur associé. Un tel équipement exige une dépense importante.

Une autre solution proposée est décrite dans US-A-4 356 639 où une différence de pression hydrostatique est exploitée. Un petit réservoir portatif d'eau utilisé est posé sur un endroit où une mesure de niveau doit être effectuée. Ce réservoir d'eau est relié par un tuyau à un convertisseur de pression du type à pont de mesure incorporant des jauges de contrainte. Une variation de niveau de cet endroit par rapport à un niveau de référence représenté par celui de ce convertisseur de pression provoque une variation de la hauteur de la colonne d'eau entre ce réservoir d'eau et ce convertisseur de pression, c'est-à-dire une variation de pression qui agit à travers une membrane élastique de ce convertisseur sur les jauges et engendre à travers un déséquilibre de ce pont de mesure, une tension électrique. Cette tension électrique est amplifiée et convertie par un circuit électronique en une différence de niveau à mesurer. Pour mesurer une variation de niveau de plusieurs endroits d'une construction ou installation, il faut soit transporter cet équipement "réservoir d'eau-convertisseur de pression", l'installer et opérer la mesure dans chacun de ces endroits, ce qui entraîne une perte de temps et conduit à une impossibilité dans le cas d'une mesure ou surveillance de changement de niveau de ces différents endroits, soit disposer d'un nombre d'équipements identiques égal au nombre de ces endroits, ce qui mène à des frais élevés.

Une fois les variations de niveau de ces endroits sont mesurées, un retour aux niveaux initiaux de ces endroits devrait être opéré pour assurer un bon maintien ou bon fonctionnement de cette construction ou installation.

Jusqu'à présent n'est retrouvé aucun système de mise à niveau qui effectue à la fois une mesure de variation de niveau d'un ou plusieurs endroits ou points d'une construction ou installation et une correction de cette variation en ramenant ce ou ces endroits ou points à son ou leurs niveaux initiaux.

Le document FR-A-2 562 987 décrit seulement un dispositif de positionnement fin, à une fraction de millimètre, exploitant le phénomène de dilatation thermique d'un corps soumis à une variation de température.

Ce corps dilatable étant soit solide sous forme d'un barreau soit liquide maintenu dans un récipient et disposé entre un support servant de surface de référence et un plateau servant de surface à positionner, est entouré d'une résistance électrique chauffante ou branché à une tension électrique en vue d'y créer un effet Joule et de la porter à une température précise correspondante à une valeur précise de sa dilatation déterminant une donnée souhaitée de positionnement.

La présente invention visant à éviter ces inconvénients permet de réaliser un dispositif économique de mesure de variation verticale de position pouvant déceler des variations de faibles valeurs de l'ordre de un dixième de millimètre et un système économique et efficace de mise à niveau muni d'un tel dispositif pouvant assurer dans une installation industrielle ou scientifique même un réglage de position de ses principaux points suivant une faible valeur de l'ordre de un dixième de millimètre.

Selon l'invention, un dispositif de mesure de variation verticale de position d'un ou plusieurs points (2,3,4,5) au moyen d'écarts de pression hydrostatique, de jauges de contrainte et de circuits électroniques d'amplification et de conversion, est caractérisé en ce qu'il comprend d'une part au moins un tube (8) fixé respectivement à ces points et ayant des extrémités (11,12) en communication libre avec un bac à fluide liquide ouvert à l'air libre pour être constamment rempli avec ce fluide liquide (7), et d'autre part des jauges de pression fixées à la partie inférieure de la paroi de ce tube rempli de fluide liquide à l'endroit de ces points et un appareil électronique (25) assurant une amplification et une conversion des données électriques de mesure émises par ces jauges, en données de mesure linéaire de variation de niveau de ces points et un enregistrement et/ou une visualisation de ces données.

Un système de mise à niveau de un ou plusieurs points déterminés d'une construction ou installation industrielle ou scientifique telles que celle d'un synchrotron, muni d'un dispositif de mesure de variation verticale de position de ces points et d'un ensemble de compensation de niveau à changement dimensionnel par action thermique inséré entre ce ou ces points et son ou leurs supports, est caractérisé en ce qu'il comprend comme ensemble de compensation de niveau à changement dimentionnel par action thermique, d'une part des éléments thermiquement dilatables insérés respectivement entre ces points et leurs supports respectifs et des éléments chauffants associés, et d'autre part un dispositif de mesure de variation verticale de position et un relais de commande reliant ces éléments chauffants aux sorties correspondantes de ce dispositif de mesure de variation verticale de position et assurant une alimentation individuelle, automatique ajustée en énergie électrique de ces éléments chauffants déterminant une compensation précise de la variation de niveau de ces points par ces éléments dilatables et une remise de ces points à leurs niveaux initiaux.

Pour mieux faire comprendre l'invention on en décrit ci-après un certain nombre d'exemples de réalisation illustrés par des dessins ci-annexés dont :

- la figure 1 représente une vue schématique d'un dispositif de mesure de variation verticale de position réalisé selon l'invention ;
- la figure 2 représente à une autre échelle une vue partielle et schématique du dispositif de la figure 1 ;
- la figure 3 représente à une autre échelle une vue partielle et schématique d'une variante de réalisation du dispositif de la figure 1 ;
- la figure 4 représente à une autre échelle une vue schématique et partielle d'un système de mise à niveau réalisé selon l'invention, muni d'un dispositif de mesure de variation verticale de position de la figure 1, et
- la figure 5 représente à une autre échelle, une vue schématique et partielle d'un synchrotron à électrons dans lequel sont montés le dispositif de multi-mesure de variation verticale de position de la figure 1 et le système de mise de niveau de la figure 4.

Un dispositif de multi-mesure de variation verticale de position réalisé selon l'invention est applicable à une mesure, à une surveillance ou à une commande de mise de niveau de un ou plusieurs points déterminés d'une construction ou d'une installation industrielle ou scientifique.

Selon une caractéristique importante, un dispositif de multi-mesure de variation verticale de position de un ou plusieurs points déterminés comprend des moyens de mesure de pression se manifestant aux endroits de ces points et dont la variation a une relation directe avec une variation de niveau de ces derniers. Ce dispositif comprend des moyens convertissant des résultats de cette mesure de variation de pression en résultats de mesure linéaire de variation de niveau de ces points. Et ces points sont des points déterminés choisis qui peuvent être très rapprochés les uns des autres de quelques centimètres ou très éloignés les uns des autres de plusieurs centaines de mètres.

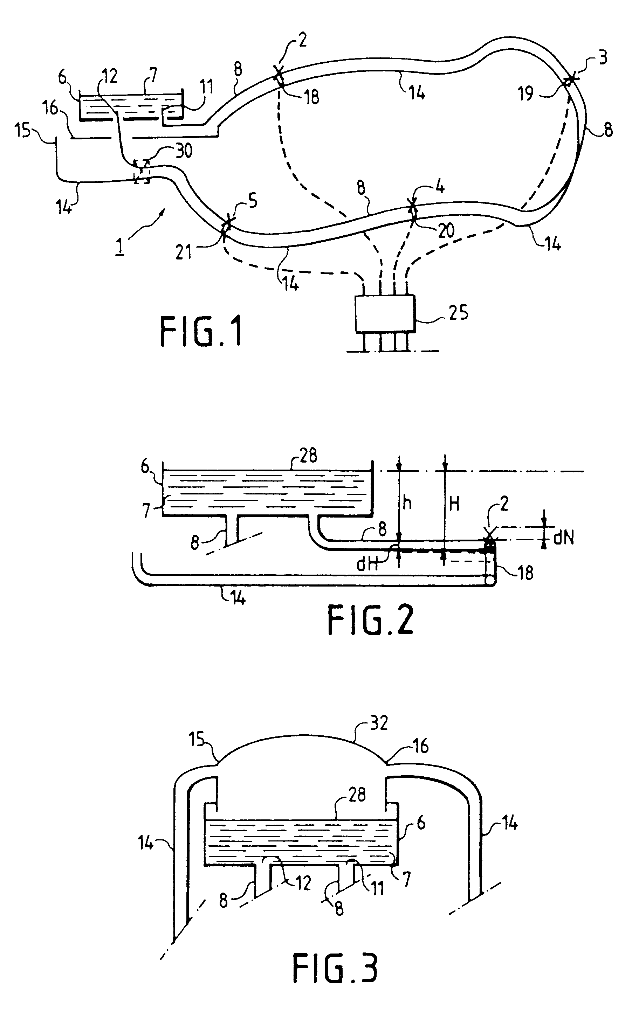

Dans un exemple de réalisation illustré dans la figure 1, un dispositif de multi-mesure de variation verticale de position 1 de plusieurs points déterminés 2, 3, 4, 5 comprend comme moyens de mesure de pression d'une part un bac 6 à fluide liquide 7 ouvert à l'air libre, un premier tube 8 fixé respectivement à ces points 2, 3, 4, 5 et ayant deux extrémités 11, 12 en communication libre avec le bac 6 pour être constamment rempli avec ce fluide liquide 7, et un deuxième tube rempli d'air 14 fixé respectivement également à ces points 2, 3, 4, 5 et ayant deux extrémités 15, 16 ouvertes librement à l'atmosphère ambiante à proximité du bac 6 à fluide liquide 7 et d'autre part des jauges de pression 18, 19, 20, 21 d'un type connu, fixées d'un côté à la partie inférieure de la paroi du tube 8 à fluide liquide 7 respectivement aux emplacements des points 2, 3, 4, 5 et de l'autre côté au tube à air 14, et comme moyens de convertissement des résultats de cette mesure, un appareil électronique d'un type connu 25 non décrit dans la suite assurant une amplification et un convertissement d'une manière connu des données électriques de mesure émises par ces jauges en données de mesure linéaire de variation de niveau de ces points, et un enregistrement et/ou une visualisation de ces données.

Quand un point 2 des points 2, 3, 4, 5 subit par exemple une variation de niveau dN (figure 2) le tube 8 à fluide liquide 7 attaché à ce point, le suit dans son mouvement de manière que la hauteur de la colonne de fluide liquide 7 dans le tube 8 vis-à-vis de la surface libre 28 de ce fluide liquide 7 dans le bac 6, passe de h à H c'est-à-dire (h + dH = H) une variation de hauteur de colonne de fluide liquide 7 d'une valeur dH, et la jauge de pression 18 correspondant à ce point 2 mesure alors une variation de pression de dP. La variation de pression dP mesurée par la jauge 18 a donc une relation directe avec la variation de niveau dN.

Il en résulte que les variations de pression dP mesurées par les jauges 18, 19, 20, 21 représentent fidèlement les variations de niveau dN des points 2, 3, 4, 5 et sont directement convertis en dN par l'appareil électronique de saisie de résultats de mesure 25.

Dans l'exemple illustré, le fluide liquide 7 est constitué par du mercure, le tube 8 à fluide liquide a un diamètre choisi, situé entre 1 et 2 centimètres et le tube à air 14 a un diamètre chois, situé entre 0,3 centimètre et 10 centimètres.

Le tube à air 14 comprend des extrémités se trouvant à proximité du bac 6 et ouvertes librement dans l'atmosphère. Cette disposition permet d'avoir une pression atmosphérique de référence homogène en n'importe quel endroit de ce tube 14 et d'utiliser en conséquence des jauges de pression économiques répondant simplement à une exigence de fidélité de fonctionnement.

Dans une première variante de réalisation on représentée, le dispositif de multi-mesure de variation verticale de position comprend les mêmes éléments que ceux du dispositif illustré dans les figures 1 et 2 à l'exception du fait que ce tube à air 18 est supprimé et que les jauges de pression économique 18, 19, 20, 21 sont remplacées par des jauges de pression de type absolu plus coûteuses qui doivent avoir une bonne sensibilité et une grande précision.

Dans une deuxième variante de réalisation du dispositif de liquide illustré dans les figures 1 et 2, une pompe de circulation de liquide 30 est montée dans le tube 8 pour accélérer et parfaire un remplissage en fluide liquide 7.

Dans une troisième variante de réalisation du dispositif multi-mesure de variation de position, partiellement et schématiquement illustrée dans la figure 3, le bac 6 à fluide liquide 7 est fermé par un couvercle 32 et les extrémités 15 et 16 du tube à air 14 sont ouvertes à travers ce couvercle 32, et au-dessus de la surface libre 28 du fluide liquide 7.

Le dispositif de multi-mesure de variation verticale de position illustré dans les figures 1 et 2, permet avantageusement d'effectuer avec une même facilité des mesures de variation de niveau des points déterminés choisis qui sont en vue directe les uns vis-à-vis des autres et des mesures de variation de niveau des points déterminés choisis qui sont cachés les uns par rapport aux autres. Cette grande facilité de mesure n'est pas retrouvée dans des systèmes à visée à laser déjà rappelés dans un paragraphe précédent.

Selon l'invention, un système de mise de niveau de un ou plusieurs points déterminés, muni d'un dispositif de multi-mesure de variation verticale de position qui est décrit ci-dessus et illustré dans les figures 1 à 3, comprend inséré entre ce ou ces points et son ou leurs supports, un ensemble de comprensation de niveau à change ment dimensionnel par action thermique.

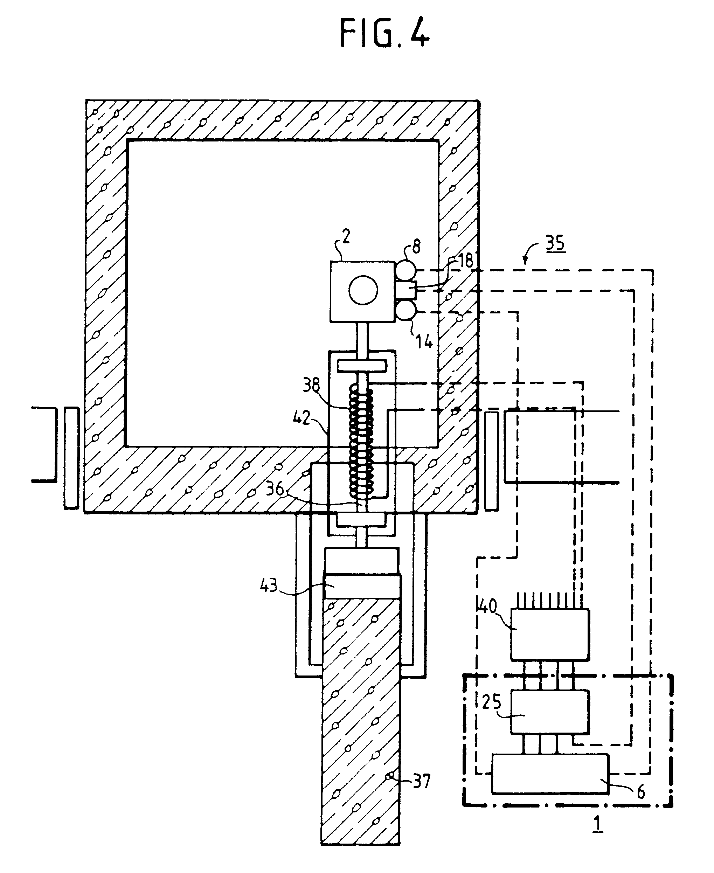

Dans un exemple de réalisation partiellement et schématiquement illustré dans les figures 1 et 4, un système de mise de niveau 35 des points 2, 3, 4, 5 comprend comme ensemble de compensation de niveau à changement dimensionnel par action thermique, d'une part des éléments thermiquement dilatables 36 tels que des tiges métalliques, des vérins fonctionnant sous l'action d'une matière thermiquement dilatable..., insérés respectivement entre ces points 2, 3, 4, 5 et leurs supports respectifs 27, et des éléments chauffants 38 associés à ces éléments dilatables 36 et d'autre part un dispositif de multi-mesure de variation verticale de position 1 et un relais de commande 40 d'un type connu qui relie les éléments chauffants 38 aux sorties correspondantes du dispositif de multimesure de variation de position 1 autrement dit aux sorties de son appareil électronique de saisie de résultats de mesure 25 de manière à assurer une alimentation individuelle automatique et ajustée en énergie électrique de ces éléments chauffants pour obtenir une compensation automatique précise de la variation de niveau de ces points 2, 3, 4, 5 par ces éléments dilatables 36 et remettre ces points dans un même plan qui est un plan confondu ou parallèle à leur plan initial et sans induire de vibration mécanique.

Les éléments dilatables 36 et leurs éléments chauffants associés 38 sont de préférence thermiquement isolés du milieu ambiant par des calorifuges 42, et mécaniquement isolés des supports 37 de ces points 2, 3, 4, 5 par des isolants thermiques et/ou anti-vibratoires.

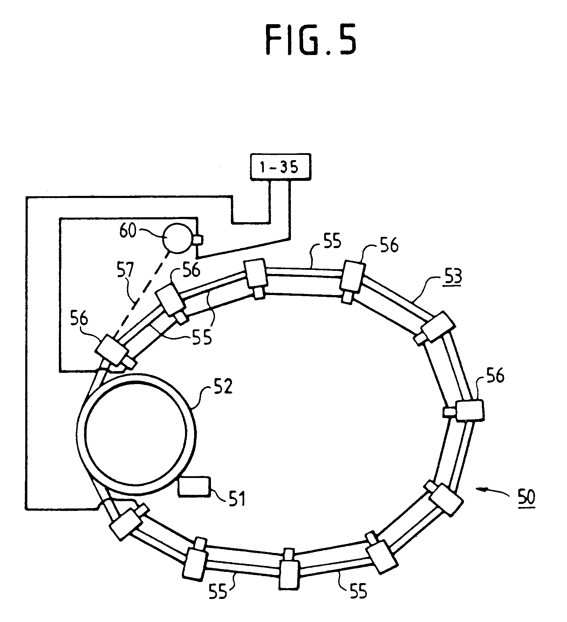

Le dispositif de multi-mesure de variation verticale de position 1 et le système de mise de niveau 35 sont excellement applicables à une installation d'un synchrotron 50 partiellement et schématiquement illustré dans la figure 5.

Le synchrotron 50 comprend un dispositif injecteur d'électrons 51, un anneau synchrotron 52 et un anneau de stockage 53.

Dans l'exemple illustré, l'anneau synchrontron 52 a un diamètre de l'ordre de 150 mètres et l'anneau de stockage 53 a un diamètre de l'ordre de 270 mètres. L'anneau de stockage 53 est habituellement formé d'un assemblage bout à bout de tronçons de tube rectilignes 55 et d'électro-aimants 56 au niveau de leurs jointures pour ramener constamment le trajet d'un électron en circulation dans l'axe de ces tronçons successifs de tubes rectilignes 55.

Cet anneau de stockage 53 permet à un électron lancé par le dispositif injecteur 51 dans l'anneau synchrotron 52 et y atteint une vitesse suffisante pour être mis dans l'anneau de stocakge 53, d'émettre suivant l'axe des tronçons de tube rectilignes 55 lors d'un changement de direction de son trajet par les électro-aimants 56, au passage de l'un de ces tronçons de tube rectilignes à un autre, des rayonnements rectilignes 57 qui sortent de cet anneau de stockage 53 et qui permettent ainsi leur exploitation industrielle ou scientifique par un appareil ou récepteur 60. Pour que le synchrotron 50 et le récepteur 60 fonctionnent correctement, il faut que les positions du dispositif injecteur 51 des anneaux synchrotron 52 et de stockage 53 et du récepteur 60 soient stables en position autrement dit il faut que les axes de ceux-ci soient constamment situés dans un même plan. Une variation de niveau de ces dispositif 51, anneaux 52, 53 et appareil 60 d'une valeur de l'ordre d'un dixième de millimètre suffit à dérégler leur fonctionnement.

Le dispositif de multi-mesure de position 1 et le système de mise de niveau 35 décrits ci-dessus sont aptes à ramener constamment les axes de ces dispositifs 51, anneaux 52, 53 et appareil 60 dans un même plan qui peut être confondu ou parallèle avec leur plan initial et permettent ainsi au synchrotron 50 et à son exploitation industrielle ou scientifique de fonctionner normalement malgré les variations de niveau de ces éléments provoquées par exemple par un glissement de terrain à l'endroit où est installé ce synchrotron.

Dans le dispositif de multimesure de position 1, les éléments thermiquement dilatables 36 sont équipés de moyen de mesure thermique d'un type connu qui permet de déterminer leur dimension.

## Revendications

1. Dispositif de mesure de variation verticale de position de plusieurs points (2, 3, 4, 5) au moyen d'écarts de pression hydrostatique, de jauges de contrainte et de circuits électroniques d'amplification et de conversion, caractérisé en ce qu'il comprend d'une part au moins un tube (8) fixé respectivement à ces points (2, 3, 4, 5) et ayant des extrémités (11, 12) en communication libre avec un bac (6) à fluide liquide ouvert à l'air libre pour être constamment rempli avec ce fluide liquide (7), et d'autre part des jauges de pression fixées à la partie inférieure de la paroi de ce tube rempli de fluide liquide à l'endroit de ces points et un appareil électronique (25) assurant une amplification et une conversion des données électriques de mesure émises par ces jauges, en données de mesure linéaire de variation de niveau de ces points et un enregistrement et/ou une visualisation de ces données.

2. Dispositif selon la revendication 1, caractérisé en ce que les jauges de pression (18, 19, 20, 21) sont aussi fixées respectivement aux emplacements de ces points (2, 3, 4, 5) et de l'autre côté d'un tube à air (14) ayant des extrémités ouvertes librement à l'atmosphère ambiante à proximité du bac (16).

3. Dispositif selon la revendication 1, caractérisé en ce que le bac (6) à fluide liquide (7) est fermé par un couvercle (32) et que le deuxième tube rempli d'air (14) a des extrémités (15, 16) ouvertes à travers ce couvercle (32) dans la partie de l'enceinte fermée de ce bac (6) au-dessus de la surface libre (28) du fluide liquide (7).

4. Dispositif selon l'une des revendications 1 à 3, caractérisé en ce que dans le bac (6) et le tube (8) reliés à ce bac, le fluide liquide (7) est constitué par du mercure.

5. Dispositif selon la revendication 4, caractérisé en ce que le tube (8) rempli de fluide liquide (7) a un diamètre choisi entre un centimètre et deux centimètres.

6. Dispositif selon l'une des revendications 2 et 3, caractérisé en ce que le tube rempli d'air (14) a un diamètre choisi entre 0,3 centimètre et dix centimètres.

7. Dispositif selon l'une des revendications 1 à 6, caractérisé en ce que le tube (8) rempli de fluide liquide (7) comprend une pompe de circulation de liquide (30).

8. Système de mise à niveau de un ou plusieurs points déterminés (2, 3, 4, 5) d'une construction ou installation industrielle ou scientifique telles que celle d'un synchrotron, muni d'un dispositif de mesure de variation verticale de position (1) de ces points (2, 3, 4, 5) selon l'une des revendications 1 à 7, et d'un ensemble de compensation de niveau à changement dimensionnel par action thermique inséré entre ce ou ces points et son ou leurs supports, caractérisé en ce qu'il comprend comme ensemble de compensation de niveau à changement dimentionnel par action thermique, d'une part des éléments thermiquement dilatables (36) insérés respectivement entre ces points (2,3,4,5) et leurs supports respectifs (37) et des éléments chauffants associés (38), et d'autre part un dispositif de mesure de variation verticale de position (1) et un relais de commande (40) reliant ces éléments chauffants (38) aux sorties correspondantes de ce dispositif de mesure de variation verticale de position (1) et assurant une alimentation individuelle, automatique ajustée en énergie électrique de ces éléments chauffants (38) déterminant une compensation précise de la variation de niveau de ces points (2, 3, 4, 5) par ces éléments dilatables et une remise de ces points (2, 3, 4, 5) à leurs niveaux initiaux.

9. Système selon la revendication caractérisé en ce que dans l'ensemble de compensation de niveau à changement dimentionnel par action thermique, les éléments thermiquement dilatables (36) sont constitués par des tiges métalliques.

10. Système selon la revendication 8, caractérisé en ce que dans l'ensemble de compensation de niveau à changement dimentionnel par action thermique, les éléments thermiquement dilatables (36) sont constitués par des vérins fonctionnant sous l'action d'une matière thermiquement dilatable.

11. Système selon l'une des revendications 8 à 10, caractérisé en ce que dans l'ensemble de compensation de niveau à changement dimensionnel par action thermique, les éléments thermiquement dilatables (36) et leurs éléments chauffants associés (38) sont isolés par des calorifuges (42).

12. Système selon l'une des revendications 8 à 11, caractérisé en ce que dans l'ensemble de compensation de niveau à changement dimensionnel par action thermique, les éléments dilatables (36) et leurs éléments chauffants associés (38) sont isolés des supports (37) des points (2, 3, 4, 5) par des isolants thermiques antivibratoires.

13. Système selon l'une des revendications 8 à 12, caractérisé en ce que dans l'ensemble de compensation de niveau à changement dimensionnel par action thermique, les éléments dilatables (36) sont équipés de moyen de mesure thermique déterminant leur dimension.

**Claims**

1. An apparatus for measuring the vertical changes in position of a plurality of points (2, 3, 4, 5) by means of shifts in hydrostatic pressure, of strain gages and electronic circuits for amplification and conversion, characterized in that it comprises on the one hand at least one tube (8) fixed respectively at such points (2, 3, 4, 5) and having ends (11, 12) in free communication with a liquid tank (6) freely open to the air in order to be constantly filled with such liquid (7) and on the other hand pressure gages fixed to the inferior part of the wall of such tube filled with such liquid at the position of such points, and an electronic device (25) for amplification and conversion of electrical measurement data coming from such gages into linear measurement data for the change in level of such points, and recording and/or display of the data.

2. The apparatus as claimed in claim 1, characterized in that the pressure gages (18, 19, 20, 21) are as well fixed respectively at the positions of such points (2, 3, 4, 5) and on the other side to an air tube (14) having ends freely open to the abient atmosphere in the proximity of the tank (16).

3. The apparatus as claimed in claim 1, characterized in that the tank (6) for the liquid (7) is shut off by a cover (32) and in that the second tube (14) filled with air has ends (15 and 16) opening through such cover (32) into the part of the shut off enclosure of such tank (6) above the free surface (28) of the liquid (7).

4. The apparatus as claimed in any one of claims 1 through 3, characterized in that the liquid (7) in the tank (6) and the tube (8) connected with the tank is constituted by mercury.

5. The apparatus as claimed in claim 4, characterized in that the tube (8) filled with the liquid (7) has a diameter selected to be between one centimeter and two centimeters.

6. The apparatus as claimed in claim 2 or in claim 3, characterized in that the tube (14) filled with air has a diameter selected to be between 0.3 centimeter and ten centimeters.

7. The apparatus as claimed in any one of claims 1 through 6, characterized in that the tube (8) filled with the liquid (7) comprises a liquid circulation pump (30).

8. A system for leveling one or more predetermined points (2, 3, 4, 5) of an arrangement or an industrial or scientific installation such as a synchrotron, provided with an apparatus for the measurement of the vertical change in position (1) of such points (2, 3, 4, 5), as claimed in any one of claims 1 through 7 and of an arrangement for the level compensation involving a dimensional variation by thermal action between such point or points and its support or their supports, characterized in that it comprises, as a level compensating arrangement, on the one hand thermally expanding elements (36) placed respectively between these points (2, 3, 4, 5) and their respective supports (37) and associated heating elements (38) and on the other hand a device (1) for the measurement of the vertical variation in position and a control relay (40) connecting such heating elements (38) with the corresponding outlets of this apparatus (1) for the measurement of the vertical change in position and rendering possible individual and automatic supply, with proper adjustment, of electrical energy to these heating elements (38) providing an exact compensation of the change in level at such points (2, 3, 4, 5) by such expanding elements and the resetting of such points (2, 3, 4, 5) to their initial levels.

9. The system as claimed in claim 8, characterized in that in the arrangement for the level compensation involving a dimensional variation by thermal action, the thermally expanding elements (36) are constituted by metallic rods.

10. The system as claimed in claim 8, characterized in that in the arrangement for the level compensation involving a dimensional variation by thermal action, the thermally expanding elements (36) are constituted by piston and cylinder units functioning under the action of a thermally expanding material.

11. The system as claimed in any one of the claims 8 through 10, characterized in that in the arrangement for the level compensation involving a dimensional variation by thermal action, the thermally expanding elements (36) and their associated heating elements (38) are insulated by thermal insulation means (42).

12. The system as claimed in any one of the claims 8 through 11, characterized in that in the arrangement for the level compensation involving a dimensional variation by thermal action, the thermally expanding elements (36) and their associated heating elements (38) are insulated from the support (37) and the points (2, 3, 4, 5) by antivibration thermal insulation means.

13. The system as claimed in any one of the claims 8 through 12, characterized in that in the arrangement for the level compensation involving a dimensional variation by thermal action, the thermally expanding elements (36) and their associated heating elements (38) are equipped with means for thermal measurement determining the dimension thereof.

**Patentansprüche**

1. Einrichtung zum Messen der vertikalen Positionsveränderungen mehrerer Punkte (2, 3, 4, 5) mittels hydrostatischer Druckunterschiede, Dehnungsmeßeinrichtungen und elektronischer Verstärkungs- und Wandlerschaltungen, dadurch gekennzeichnet, daß sie versehen ist einerseits mit wenigstens einem Rohr (8), das jeweils an diesen Punkten (2, 3, 4, 5) befestigt ist und Enden (11, 12) besitzt, die mit einem zur Umgebungsluft geöffneten Behälter (6) mit flüssigem Fluid in einer unbeschränkten Verbindung stehen, damit es stets mit diesem flüssigen Fluid (7) gefüllt ist, und andererseits mit Druckmeßeinrichtungen, die am unteren Teil der Wand dieses mit dem flüssigen Fluid gefüllten Rohrs an den Orten dieser Punkte befestigt sind, und einem elektronischen Gerät (25), das eine Verstärkung und Umwandlung der von diesen Druckmeßeinrichtungen ausgegebenen elektrischen Meßdaten in lineare Meßdaten bezüglich der Höhenvenänderung dieser Punkte und eine Aufzeichnung und/oder eine Anzeige dieser Daten gewährleistet.

2. Einrichtung gemäß Anspruch 1, dadurch gekennzeichnet, daß die Druckmeßeinrichtungen (18, 19, 20, 21) ebenfalls jeweils an den Stellen dieser Punkte (2, 3, 4, 5) und mit der anderen Seite an einem Luftrohr (14) befestigt sind, welches Enden besitzt, die in der Nähe des Behälters (6) zur umgebenden Atmosphäre unbeschränkt geöffnet sind.

3. Einrichtung gemäß Anspruch 1, dadurch gekennzeichnet, daß der Behälter (6) mit flüssigem Fluid (7) von einem Deckel (32) verschlossen ist und daß das mit Luft (14) gefüllte zweite Rohr Enden (15, 16) besitzt, die durch diesen Deckel (32) hindurch in den oberhalb der Oberfläche (28) des flüssigen Fluids (7) befindlichen Teil des geschlossenen Raums dieses Behälters (6) geöffnet sind.

4. Einrichtung gemäß einem der Ansprüche 1 bis 3, dadurch gekennzeichnet, daß das flüssige Fluid (7) in dem Behälter (6) und in dem mit diesem Behälter verbundenen Rohr (8) durch Quecksilber gebildet ist.

5. Einrichtung gemäß Anspruch 4, dadurch gekennzeichnet, daß das mit dem Fluid (7) gefüllte Rohr (8) einen Durchmesser besitzt, der zwischen einem Zentimeter und zwei Zentimetern gewählt ist.

6. Einrichtung gemäß einem der Ansprüche 2 und 3, dadurch gekennzeichnet, daß das mit Luft gefüllte Rohr (14) einen Durchmesser besitzt, der zwischen 0,3 Zentimetern und zehn Zentimetern gewählt ist.

7. Einrichtung gemäß einem der Ansprüche 1 bis 6, dadurch gekennzeichnet, daß das mit dem flüssigen Fluid (7) gefüllte Rohr (8) eine Flüssigkeits-Zirkulationspumpe (30) umfaßt.

8. System zur Einstellung der Höhe eines oder mehrerer bestimmter Punkte (2, 3, 4, 5) einer industriellen oder wissenschaftlichen Konstruktion oder Anlage wie etwa eines Synchrotrons, mit einer Einrichtung zum Messen der vertikalen Positionsveränderung (1) dieser Punkte (2, 3, 4, 5) gemäß einem der Ansprüche 1 bis 7 und einer Einheit zum Höhenausgleich mit Dimensionsänderung durch thermische Wirkung, die zwischen diesem oder diesen Punkten und dessen oder deren Trägern eingefügt ist, dadurch gekennzeichnet, daß es als Einheit zum Höhenausgleich mit Dimensionsänderung durch thermische Wirkung versehen ist einerseits mit wärmedehnbaren Elementen (36), die jeweils zwischen diesen Punkten (2, 3, 4, 5) und deren entsprechenden Trägern (37) eingefügt sind, und zugehörigen Heizelementen (38) und andererseits mit einer Einrichtung zum Messen der vertikalen Positionsveränderung (1) und einem Steuerrelais (40), das diese Heizelemente (38) mit den entsprechenden Ausgängen dieser Einrichtung zum Messen der vertikalen Positionsveränderung (1) verbindet und eine individuelle, automatische Versorgung dieser Heizelemente (38) mit eingestellter elektrischer Energie gewährleistet, die einen genauen Ausgleich der Veränderung der Höhe dieser Punkte (2, 3, 4, 5) durch diese dehnbaren Elemente und eine Rückstellung dieser Punkte (2, 3, 4, 5) auf ihre anfänglichen Höhen bestimmt.

9. System gemäß Anspruch 8, dadurch gekennzeichnet, daß in der Einheit zum Höhenausgleich mit Dimensionsänderung durch thermische Wirkung die wärmedehnbaren Elemente (36) durch metallische Stifte gebildet sind.

10. System gemäß Anspruch 8, dadurch gekennzeichnet, daß in der Einheit zum Höhenausgleich mit dimensionsgerechter Änderung durch thermische Wirkung die wärmedehnbaren Elemente (36) durch Stellzylinder gebildet sind, die unter der Wirkung einer wärmedehnbaren Substanz arbeiten.

11. System gemäß einem der Ansprüche 8 bis 10, dadurch gekennzeichnet, daß in der Einheit zum Höhenausgleich mit dimensionsgerechter Änderung durch thermische Wirkung die wärmedehnbaren Elemente (36) und deren zugehörige Heizelemente (38) durch Kälteisoliermittel (42) voneinander isoliert sind.

12. System gemäß einem der Ansprüche 8 bis 11, dadurch gekennzeichnet, daß in der Einheit zum Höhenausgleich mit dimensionsgerechter Änderung durch thermische Wirkung die dehnbaren Elemente (36) und deren zugehörige Heizelemente (38) von den Trägern (37) der Punkte (2, 3, 4, 5) durch vibrationsdämpfende Wärmeisolatoren isoliert sind.

13. System gemäß einem der Ansprüche 8 bis 12, dadurch gekennzeichnet, daß in der Einheit zum Höhenausgleich mit Dimensionsänderung durch thermische Wirkung die dehnbaren Elemente (36) mit einem thermischen Meßmittel ausgerüstet sind, das ihre Dimension bestimmt.

FIG.1

FIG.2

FIG.3

# FIG.4

# FIG.5